# EUROPEAN PATENT SPECIFICATION

(11) **EP 1 296 825 B1**
(45) Date of publication and mention of the grant of the patent: **01.08.2007**
(21) Application number: 01953171.4
(22) Date of filing: 21.06.2001
(51) Int. Cl.: B32B 17/10, C03C 27/12

(54) **GLAZING**
VERGLASUNG
VITRAGE

(30) Priority: 23.06.2000 EP 00202184
(43) Date of publication of application: 02.04.2003
(73) Proprietor: GLAVERBEL, 1170 Bruxelles (Watermael-Boitsfort) (BE)
(72) Inventor: LHOEST, Jean-Benoît, B-6040 Jumet (BE)
(74) Representative: Farmer, Guy Dominic
(86) International application number: PCT/EP2001/007065
(87) International publication number: WO 2001/098079

(56) References cited:
- EP-A- 0 022 727
- GB-A- 2 280 925

## Description

This invention relates to glazing panels and particularly but not exclusively to an arrangement which facilitates removal of a laminated glazing panel from a frame at the end of the glazing panel's life.

Whilst the invention will be described with particular reference to laminated windscreens it may also be used in other applications, for example other laminated vehicle glazing and laminated architectural glazing.

A common way of assembling a windscreen in a car comprises using an extruded strip or bead of adhesive, for example a polyurethane adhesive, spaced from the periphery of the glazing to adhere one face of the windscreen in a frame which forms part of the vehicle's bodywork. The adhesive may contact a decorative enamel band printed onto a surface of the windscreen rather than being in direct contact with the glass; this band hides the fixation from view from the exterior of the vehicle and may also protect the adhesive from incident ultra violet radiation. A primer may be used to facilitate adhesion between the adhesive and the glazing or enamel band.

Such adhesive systems facilitate assembly of a glazing in a vehicle frame and provide useful mechanical properties. However, they are less than ideal when it comes to remove a glazing from the vehicle, for example to replace a damaged glazing or at the end of the vehicle's life. It may also be difficult to remove the adhesive from the surface of the glazing, for example to facilitate recycling of the glazing. Theses disadvantages are inherent as the adhesive is selected to have sufficient adhesion both to the vehicle frame and to the glazing to avoid undesired separation during the life of the vehicle. Often the adhesive is also chosen to have sufficient mechanical resistance to enable the glazing to contribute to the rigidity of the vehicle.

Separation of the glazing from the bodywork by cutting the adhesive, for example using a knife, is difficult and time consuming; the inaccessibility of the adhesive when the glazing is in place also makes this inconvenient. Even when accomplished it may still be necessary to remove the adhesive from the surface of the glazing if the glazing is to be recycled. Alternatively, a central portion of the glazing may be cut out and separated leaving a peripheral band of glazing still adhered to the bodywork via the adhesive. This is again time consuming and requires special tools and precautions. In addition, only a portion of the glazing is recuperated and can be recycled.

According to a first aspect, the present invention provides a laminated glazing as defined in claim 1.

The laminating layer may be a sheet of polyvinalbutyral (PVB); it may have a thickness of between about 0.2mm and 1.2mm. Standard PVB thicknesses for car windscreens are 0.38mm and 0.76mm. The laminating layer may be a composite layer; it may comprises, for example, two sheets of PVB having another layer, for example a sheet of polyethylene terephtalate (PET) sandwiched between them. Such a PET (or other sheet) may carry a solar control coating, for example a magnetron sputtered coating stack adapted to enhance the solar control properties of the glazing.

Each sheet of glass may have a thickness of between about 1mm and 8mm, particularly between about 1.5mm and 3.5mm, more particularly between about 1.8mm and 2.5mm. Each sheet of glass need not have the same thickness as the other.

The fixing member may be a bead of adhesive, for example, a polyurethane (PU) adapted to glue the glazing panel in its frame. Alternatively, the fixing member may be an element secured at or to a surface of at least one of the sheets of glass of the glazing panel, for example by an adhesive, which is adapted to form part of a fixation to secure the glazing panel in a frame. The fixing member may be adapted to be secured directly to a surface of the glass of the glazing panel; alternatively, it may be adapted to be fixed to a layer carried on a surface of the glass of the glazing panel, for example an opaque enamel mask, or it may be adapted to be fixed to a profile or sealing joint secured to a surface of the glass of the glazing panel which may itself form part of the fixing member. A surface treatment, for example using a primer, may be used to help secure the fixing member at or to the glazing panel.

The attachment portion may comprise a peripheral portion of the glazing panel which extends to a peripheral edge of the glazing panel. Alternatively, the attachment portion may comprise a portion of the glazing panel spaced from the peripheral edge, for example spaced by a distance of between about 5mm and 50mm from the edge of the glazing panel. The attachment portion may follow the entire periphery of the glazing panel or may follow part of the periphery of the glazing panel, for example, along part of an edge of the glazing panel. The attachment portion may be between about 5mm and 50mm wide.

The weakness zone preferably facilitates separation of a portion of the laminating layer from the glass sheet to which the fixing member is attached or adapted to be attached, preferably at a portion of the glazing panel at which the fixing member is attached or is adapted to be attached. In this way, a portion of the glazing panel may be removed from the frame leaving the fixing member attached to the frame by destroying the integrity of the glazing panel and of the laminating layer at the attachment portion. This may avoid the necessity to cut, break of otherwise destroy the integrity of the laminating layer in order to separate the glazing panel from a frame in which it is secured.

Arranging the weakness zone around the entire or substantially the entire periphery of the glazing may enable a central or major portion of the glazing to be easily removed by causing total or partial fracturing of the glass at at least a portion of the weakness zone.

The weakness zone may extend across substantially the entire width at which the fixing member at secured to the attachment portion; in this case, it preferably extends across a greater width so as to facilitate separation between the fixing member and the attachment portion. Alternatively, the weakness zone may be positioned at the attachment portion, spaced from the position at which the fixing member at secured to the attachment portion.

The discontinuity in the laminating layer between the two sheets of glass provided by the weakness zone may be a portion which provides a weakness between the sheet of glass to which the fixing member is secured or adapted to be secured and a portion of the glazing panel which is intended to be removed from a frame. The weakness zone or discontinuity may be provided, for example, by providing a portion of non-adherence or substantial non-adherence between the laminating layer and the sheet of glass to which the fixing element is adapted to be secured.

The weakness zone may be provided, for example, by one or more of:
a) interposing a material between the laminating layer and the sheet of glass adapted to be secured to the fixing member, the said material having at least one substantially non-adhering interface with the laminating layer and/or with the glass sheet. A sheet of a plastics material, preferably a self supporting polymer for example a PET may be used. Such a material may be inherently substantially non-adherent to the laminating layer and/or the glass or may be treated to give it this property. A paint or enamel may be used.
b) arranging a layer material that ruptures at some point in its thickness to allow separation of the windscreen from the fixing member, between the laminating layer and the sheet of glass adapted to be secured to the fixing member. A paint may be used. Alternatively, a strip or band of material which is transformed or burnt or carbonised during processing of the glazing, for example during heating and bending of the glazing, may be used.
c) providing a portion of the laminating layer and/or a portion of the surface of one of the sheets of glass which has been prepared or treated so as to provide a weakness zone. Such treatment may comprise treating the laminating layer and/or one of the sheets of glass with a silane e.g. CF₃-(CF₂)₇-Si(OCH₃)₃, a dimethyl dichlorosilane, a hydrophobic compound and/or treating a portion of the laminating layer to provide a weakness zone of reduced adherence to at least one of the glass sheets, for example by treating the laminating layer either before or after assembly with the sheets of glass with a laser and/or in a way to cause dehydration or chemically modification.

The use of an opaque layer to form the weakness zone that may be applied either to one of the sheets of glass or to the laminating layer, for example by silk screen printing, may be advantageous especially if this provides the weakness zone between the two sheets of glass and additionally removes the necessity of providing a separate masking band. Alternatively, a masking band, for example, an enamel may be positioned between the two sheets of glass, and the weakness zone may be provided by a zone of substantial non-adherence between the masking band and a glass sheet on which the masking band is supported or between the masking band and the laminating layer.

Preferably, the outer or exposed sheet of glass of the laminated glazing panel has a substantially continuous contact with the laminating layer which is not substantially weakened or interrupted by the weakness zone or weakening element.

According to further aspects, the invention also provides a laminated glazing panel as defined in claim 12, a vehicle comprising a laminated glazing panel as defined in claim 13, for use of a glazing panel as defined in claim 14 and for methods of removing a glazing panel as defined in claims 15 and 16.

Embodiments of the invention will now be described, by way of example only, with reference to the accompanying drawings of which:
- Fig 1: is a plan view of a laminated windscreen;
- Fig 2: is a sectional view through a peripheral portion of the windscreen of Fig 1 assembled in a frame;
- Fig 3: is a sectional view equivalent to Fig 2 showing removal of the windscreen from its frame;
- Fig 4: is a plan view of an alternative form of a laminated windscreen;
- Fig 5: is a sectional view of the peripheral portion of an alternative laminated windscreen assembled in a frame;
- Fig 6: is a sectional view equivalent to Fig 5 showing removal of the windscreen from its frame;
- Fig 7: is a sectional view of the peripheral portion of another form of laminated windscreen assembled in a frame;
- Fig 8: is a sectional view of a further embodiment;
- Fig 9: is a plan view of a corner section of glazing panel; and
- Fig 10: is a plan view of a corner section of an alternative glazing panel.

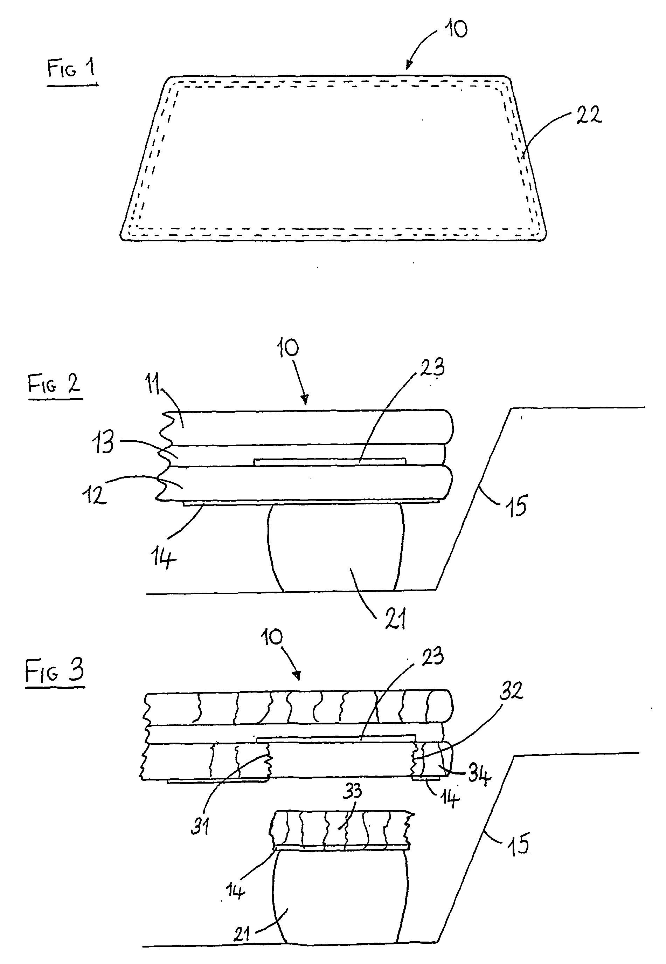

The windscreen 10 of Fig 1 is adapted to be secured into a frame 15 provided as part of a car's bodywork be means a fixing member in the form of a bead of adhesive 21 which is adapted to contact the windscreen around its entire periphery at an attachment portion 22. The attachment portion 22 is in the form of a band having a width of between about 25mm and 40mm spaced by a distance of between about 5mm and 25mm from the peripheral edge of the windscreen. The bead of adhesive 21 is secured at the attachment portion of the glazing panel over a width of about 5 to 15mm.

As shown in Fig 2, the windscreen comprises two sheets of glass 11, 12 adhered together by a sheet of PVB 13. A masking band of black enamel 14 (not shown in Fig 1) is provided on the underside of the windscreen to mask the adhesive 21 from the exterior of the vehicle.

A weakening zone 23 is provided around the entire attachment portion 22 across the entire width at which the bead of adhesive 21 is secured to the attachment portion, by a band of PET positioned between the two sheets of glass 11, 12 interposed between the sheet of glass 12 to which the bead of adhesive 21 is attached and the PVB laminating layer 13. This strip of PET adheres to the PVB but does not adhere to the sheet of glass 12 with which it is in contact.

To remove the windscreen 10 from its frame 15 the windscreen 10 is shattered around its periphery at the attachment portion 22, for example by hitting it with a hammer or other suitable tool. Once fractures 31, 32 have been created in the glass sheet 12 at positions spaced outwardly from the adhesive band 21, the windscreen 10 can be lifted clear of the frame 15 as there is little or no adherence between the PET weakening member 23 and the glass or glass fragments 33 which were originally part of the glass sheet 12 and which remain, at least for the most part, adhered to the adhesive bead 21.

Once the windscreen 10 is removed, easy access is provided to the adhesive bead 21; this may be useful to enable total or partial removal of the adhesive bead 21 from the frame 15 for example to fit a replacement windscreen in the frame.

The substantial absence of adhesive 21 from the portion of the windscreen that is removed may facilitate recycling of the glazing, particularly if the decorative enamel band 14 (if used) is itself recyclable. Whilst some glass 33 remains attached to the adhesive 21, the vast majority of the weight of the windscreen is recuperated; this may be advantageous for recycling purposes.

In this example in which the weakness zone 23 does not extent to the peripheral edge of the glazing, a portion 34 of the windscreen between the edge of the weakness zone and the edge of the windscreen remains attached to the portion of the windscreen 10 which is removed. This arrangement also enables the exposed portion of the laminating layer at the edge of the glazing panel to comprise PVB across its entire thickness without exposure of the weakness zone at the edge of the glazing panel. This may help to prevent ingress of humidity into the PVB from the exterior; such humidity penetration may provoke undesired de-lamination of the PVB from the glass. In cases where the weakness zone extends to the edge of the glazing, this portion 34 would remain attached to the adhesive 21 or may separate into loose pieces of glass.

In this embodiment, the weakness zone 23 does not interrupt the adhesion between the PVB lamination layer 13 and the outer sheet of glass 11. This may be advantageous to prevent undesired separation of any portions of glass of the outer sheet 11, for example if this sheet of glass 11 is struck by flying gravel at or adjacent to the position of the weakness zone.

It may be sufficient for the weakness zone to provide a zone of weakened adherence between the two sheets of glass and not necessarily a zone of complete non-adherence. The adherence of the sheets of a laminated glazing to the laminated layer are often assessed by means of the pummel test giving a pummel value of between 0 (non-adherence) to 10 (complete adherence in the test). A pummel value of between 3 and 7 is usually required for the outer sheet of a laminated windscreen for automotive use. The weakness zone may have a pummel value of less than or equal to 3, and preferably less than or equal to 2, with respect to at least one of the sheets of glass.

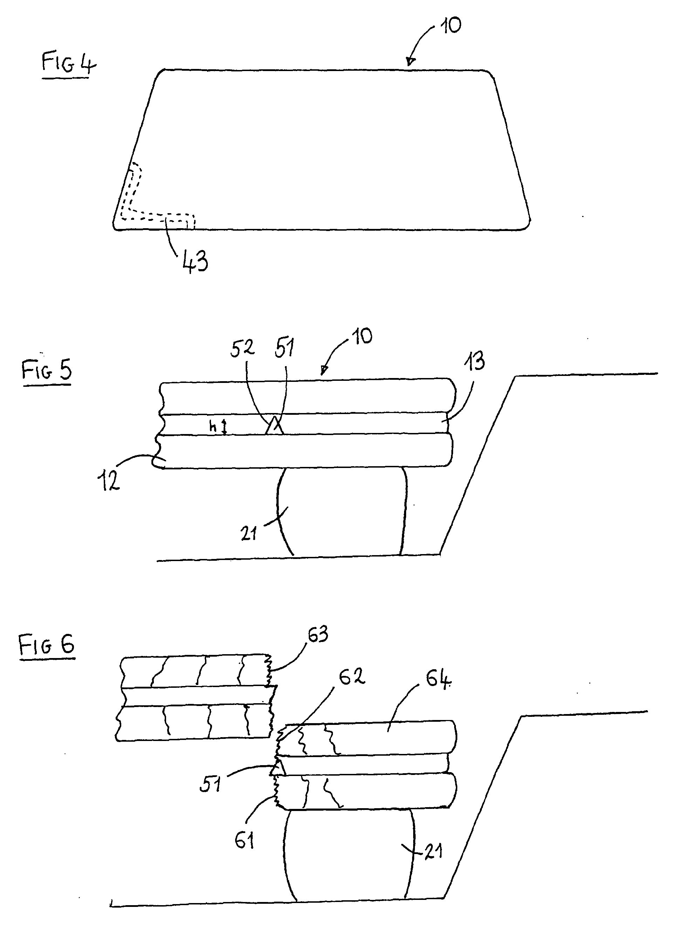

Fig 4 shows an alternative embodiment in which a weakness zone 43 (provided in a fashion similar to that of Fig 1) is provided at only one portion of the periphery of the windscreen 10. This portion may be separated as described above and used to provide an access to facilitate separation of the remaining portions of the windscreen, for example, by providing an access for a crowbar or other lever to be inserted between the windscreen and the frame. In such an arrangement part or all of the weakness zone 43 may be hidden or protected in normal use of the vehicle, for example, by being positioned at a portion of the windscreen protected or covered by the vehicle bonnet in normal driving use.

The attachment portion and/or the weakness zone may be discontinuous and more than one attachment portion and/or the weakness zone may be used.

In the embodiment of Fig 5 and Fig 6, the weakness zone is provided by a weakening element in the form of an insert 51 positioned between the two sheets of glass 11,12 spaced towards the centre of the windscreen 10 with respect to its attachment portion at which the adhesive band 21 secures the lower glass sheet 12 to the frame 15. The height of the weakening element is substantially the same as or slightly less that the thickness of the laminating layer 13.

The weakening element has at least one substantially non-adherent face 52 in contact with the laminating layer 13. Preferably, the entire weakening element 51 in substantially non-adherent to the laminating layer 13.

As shown in Fig 6, when fractures are created in the sheets of glass 11, 12 at the weakening element 52, for example by tapping the windscreen with a hammer, a central portion 63 of the windscreen may be removed whilst a peripheral portion 64 remains attached to the adhesive band 21.

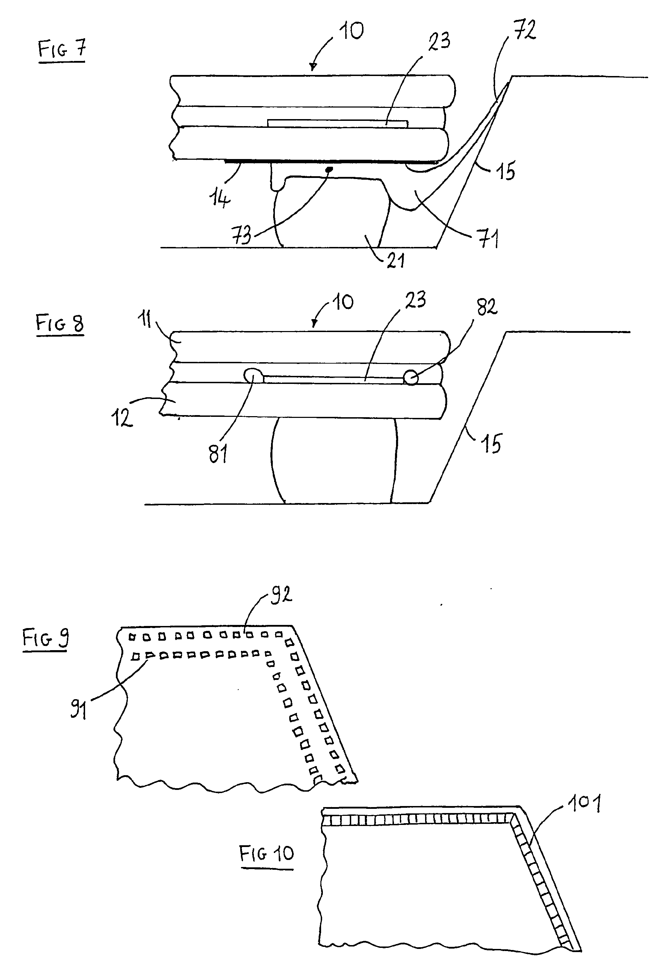

The embodiment of Fig 7 has a fixing member 71 in the form of a moulded or extruded profile having a sealing lip 72 and a base 73 which is firmly secured to a black enamel band 14 at the underside of the windscreen 10. The profile 71 is adhered in the vehicle frame 15 by an adhesive bead 21. In this embodiment, the profile 71 remains attached to the vehicle bodywork 15 when a central portion of the glazing is removed as in Fig 3. This may facilitate recycling of the glazing.

In the embodiment of Fig 8, heating elements 81, 82 are provided at each edge of the weakness zone 23. These heating elements are adapted to cause fracture of the windscreen 10 at the weakness zone when it is desired to remove the windscreen from its frame 15. In the illustrated example, it is only necessary to cause fracturing of the lower glass sheet 12.

The heating element may be a wire or conductive line, for example an electrically conducting enamel printed on the glazing and may be adapted to be heated by connection to an electrical power source or by induction. The heating element may be provided between the two sheets of glass 11,12 and/or at the upper and/or lower surfaces of one or both of the sheets of glass 11,12. Where the windscreen has a masking band, for example of a black enamel, this may be used to mask the presence of a heating element.

The heating element may be positioned at and/or adjacent to the weakness zone and may form one or more continuous lines following the periphery of the weakness zone.

Fig 9 and Fig 10 show forms of heating elements 91, 92, 101 particularly adapted for printing onto a surface of a glass sheet in an electrically conductive enamel (for example a silver paste typically used for the heating network printed on to the rear window of a car to provide a de-misting resistance heater) and subsequent heating by induction to cause localised breakage of the windscreen. The plurality of closed circuits provided by the patterns ensures that if one or more of the closed circuits breaks, either before or during localised breakage of the windscreen, the closed circuits which remain in tact remain heatable by induction. The lines of such an induction network may have a width of between about 0.2 and 5 mm, preferably between about 0.5 and 2 mm and a thickness of between about 3 to 10 microns, preferably about 5 microns. They may have a resistivity of between about 1 and 15 microohm cm, preferably between about 3 and 10 microohm cm.

The or part of the weakness zone may be protected from the exterior of the vehicle, for example, by means of part of an extrusion or moulding that extends over a peripheral portion of the exterior face of glass sheet 11 or by means of an insert positioned in any gap between the edge of the glazing and a side wall of the frame 15 of the bodywork.

Preferably, glazings according to the invention conform to European standard R43.

The ability to quickly remove the glazing from its frame may be used to minimise the time needed to dismantle the vehicle or replace the glazing or to provide access through the glazing in the case of an accident.

## Claims

1. A laminated glazing panel comprising at least two sheets of glass adhered together by a substantially transparent laminating layer, the glazing panel having an attachment portion at which the glazing panel is adapted to be secured to a frame by a fixing member secured at a surface of one of the sheets of glass **characterised in that** at least part of the attachment portion comprises a weakness zone positioned between the two sheets of glass adapted to facilitate separation of at least a portion of the glazing from its fixing member.

2. A laminated glazing panel in accordance with claim 1, in which the attachment portion follows the entire periphery of the glazing panel and in which the weakness zone is present around the entire length of the attachment portion.

3. A laminated glazing panel in accordance with claim 1 or claim 2, in which the weakness zone comprises a discontinuity in the laminating layer between the two sheets of glass at the attachment portion.

4. A laminated glazing panel in accordance with any preceding claim, in which the weakness zone is provided across substantially the entire width at which the fixing member is adapted to be secured at the attachment portion.

5. A laminated glazing panel in accordance with any preceding claim, in which the weakness zone is provided by a weakening element positioned between the two sheets of glass.

6. A laminated glazing panel in accordance with claim 5, in which the weakening element provides a zone of weakened adhesion between the two sheets of glass.

7. A laminated glazing panel in accordance with claim 5 or claim 6, in which the weakening element which provides a zone of weakened adherence between the sheet of glass to which the fixing member is adapted to be secured and the laminating layer.

8. A laminated glazing panel in accordance with any one of claims 5 to 7, in which the weakening element is a strip of a plastics material.

9. A laminated glazing panel in accordance with any one of claims 5 to 8, in which the weakening element comprises a material applied to a surface of one of the sheets of glass and/or onto a portion of the surface of the laminating layer prior to lamination of the two sheets of glass with the laminating layer to form the laminated glazing panel.

10. A laminated glazing panel in accordance with claim 9, in which the material of the weakening element is selected from the group consisting of a paint, a lacquer, an enamel, an anti-adherent and a combination of two or more of these materials.

11. A laminated glazing panel in accordance with any preceding claim, in which at least one heating element is provided at or towards the attachment portion, the heating element being adapted to cause breakage of at least part of one of the sheets of glass at the attachment portion when heated so as to facilitate separation of the glazing panel from a frame in which it is secured.

12. A laminated glazing panel assembled in a frame provided as part of an automotive vehicle in which the laminated glazing comprises at least two sheets of glass adhered together by a substantially transparent laminating layer, the glazing panel being secured to the frame at an attachment portion of the glazing panel by a fixing member secured at a surface of one of the sheets of glass **characterised in that** at least part of the attachment portion comprises a weakness zone positioned between the two sheets of glass adapted to facilitate separation of at least a portion of the glazing from the fixing member.

13. A vehicle comprising a laminated glazing panel in accordance with any preceding claim assembled in a frame of the vehicle **characterised in that** the fixing member secured at a surface of one of the sheets of glass at the attachment portion of the glazing panel comprises an adhesive attached directly to the vehicle's bodywork.

14. Use of glazing panel in accordance with any one of claims 1 to 11 to facilitate removal of the glazing from a frame in which it is secured.

15. A method of removing a glazing panel in accordance with any one of claim 1 to 11 from a frame in which it is secured comprising the sequential steps of
a) breaking the glazing panel at at least a section of the attachment portion; and
b) using the thus broken section of the attachment portion to provide an access to facilitate removal of the glazing panel from the frame.

16. A method of removing a glazing panel in accordance with any one of claim 1 to 11 from a frame in which it is secured in which the attachment portion of the glazing panel follows substantially the entire periphery of the glazing panel and in which the weakness zone is present around substantially the entire length of the attachment portion comprising the sequential steps of
a) breaking the glazing panel along substantially the entire length of the attachment portion; and
b) subsequently removing the glazing panel from the frame so as to leave at least some fragments of broken glass from the attachment portion secured to the frame.

## Patentansprüche

1. Laminierte Verglasungsplatte, umfassend mindestens zwei Glasscheiben, miteinander durch eine im wesentlichen transparente laminierende Schicht verbunden, wobei die Verglasungsplatte einen Halterungsabschnitt aufweist, an welchem die Verglasungsplatte eingerichtet ist, an einen Rahmen durch ein Befestigungsmittel, befestigt an einer Oberfläche von einer der Glasscheiben, befestigt zu werden, **dadurch gekennzeichnet, daß** mindestens ein Teil des Halterungsabschnitts eine Schwachstellenzone, angeordnet zwischen den zwei Glasscheiben, umfaßt, die eingerichtet ist, die Trennung von mindestens einem Abschnitt der Verglasung von dessen Befestigungsmittel zu erleichtern

2. Laminierte Verglasungsplatte gemäß Anspruch 1, worin der Halterungsabschnitt der gesamten Peripherie der Verglasungsplatte folgt, und worin die Schwachstellenzone um die gesamte Länge des Halterungsabschnitts vorliegt.

3. Laminierte Verglasungsplatte gemäß Anspruch 1 oder Anspruch 2, worin die Schwachstellenzone eine Diskontinuität in der laminierenden Schicht zwischen den zwei Glasscheiben an dem Halterungsabschnitt umfaßt.

4. Laminierte Verglasungsplatte gemäß einem vorhergehenden Anspruch, worin die Schwachstellenzone über im wesentlichen die gesamte Breite, an welcher das Befestigungsmittel eingerichtet ist, an den Halterungsabschnitt befestigt zu werden, angeordnet ist.

5. Laminierte Verglasungsplatte gemäß einem vorhergehenden Anspruch, worin die Schwachstellenzone mit einem verdünnenden bzw. abschwächenden Element, angeordnet zwischen den zwei Glasscheiben, versehen ist.

6. Laminierte Verglasungsplatte gemäß Anspruch 5, worin das abschwächende Element eine Zone abgeschwächter Haftung bzw. Bindung zwischen den zwei Glasscheiben bereitstellt.

7. Laminierte Verglasungsplatte gemäß Anspruch 5 oder Anspruch 6, worin das abschwächende Element eine Zone bzw. einen Bereich abgeschwächter Haftung bzw. Bindung zwischen der Glasscheibe, an welcher das Befestigungsmittel eingerichtet ist befestigt zu werden, und der laminierenden Schicht bereitstellt.

8. Laminierte Verglasungsplatte gemäß einem der Ansprüche 5 bis 7, worin das abschwächende Element ein Streifen eines Kunststoffmaterials ist.

9. Laminierte Verglasungsplatte gemäß einem der Ansprüche 5 bis 8, worin das abschwächende Element ein Material, aufgebracht auf eine Oberfläche von einer der Glasscheiben und/oder auf einen Abschnitt der Oberfläche der laminierenden Schicht vor der Laminierung der zwei Glasscheiben mit der laminierenden Schicht unter Bildung der laminierten Verglasungsplatte, umfaßt.

10. Laminierte Verglasungsplatte gemäß Anspruch 9, worin das Material des abschwächenden Elements aus der Gruppe, bestehend aus einem Anstrich, einer Lackierung, einer Emaille, einem Anti-Haftmittel und einer Kombination von zwei oder mehreren dieser Materialien, ausgewählt ist.

11. Laminierte Verglasungsplatte gemäß einem vorhergehenden Anspruch, worin mindestens ein Wärmeelement an oder in Richtung auf den Halterungsabschnitt angeordnet ist, wobei das Wärmeelement eingerichtet ist, Zerbrechen bzw. Bruch von mindestens einem Teil von einer der Glasscheiben an dem Halterungsabschnitt, wenn erwärmt, zu bewirken, so daß die Trennung der Verglasungsplatte von einem Rahmen, in welchem sie befestigt ist, erleichtert wird.

12. Laminierte Verglasungsplatte, montiert in einem Rahmen, bereitgestellt als Teil eines Kraftfahrzeugs, worin die laminierte Verglasung mindestens zwei Glasscheiben, miteinander verbunden durch eine im wesentlichen transparente laminierende Schicht, umfaßt, wobei die Verglasungsplatte an den Rahmen an einem Halterungsabschnitt der Verglasungsplatte mittels eines Befestigungsmittels, befestigt an einer Oberfläche von einer der Glasscheiben, befestigt ist, **dadurch gekennzeichnet, daß** mindestens ein Teil des Halterungsabschnitts eine Schwachstellenzone, angeordnet zwischen den zwei Glasscheiben und eingerichtet, um die Abtrennung von mindestens einem Abschnitt der Verglasung von dem Befestigungsmittel zu erleichtern, umfaßt.

13. Fahrzeug, umfassend eine laminierte Verglasungsplatte gemäß einem vorhergehenden Anspruch, montiert in einem Rahmen des Fahrzeugs, **dadurch gekennzeichnet, daß** das Befestigungsmittel, befestigt an einer Oberfläche von einer der Glasscheiben an dem Halterungsabschnitt der Glasscheibe, ein Haftmittel, direkt gebunden an den Fahrzeugaufbau, umfaßt.

14. Verwendung der Verglasungsplatte gemäß einem der Ansprüche 1 bis 11, um die Entfernung der Verglasung von einem Rahmen, an welchem sie befestigt ist, zu erleichtern.

15. Verfahren zum Entfernen einer Verglasungsplatte gemäß einem der Ansprüche 1 bis 11 von einem Rahmen, an bzw. in welchem sie befestigt ist, umfassend die nacheinanderfolgenden Schritte
a) des Brechens der Glasscheibe an mindestens einem Abschnitt des Halterungsabschnitts; und
b) des Verwendens des derart gebrochenen Abschnitts des Halterungsabschnitts unter Bereitstellung eines Zugangs, um die Entfernung der Verglasungsplatte aus dem Rahmen zu erleichtern.

16. Verfahren zur Entfernung einer Verglasungsplatte gemäß einem der Ansprüche 1 bis 11, aus einem Rahmen, in welchem sie befestigt ist, worin der Halterungsabschnitt der Verglasungsplatte im wesentlichen der gesamten Peripherie der Verglasungsplatte folgt, und worin die Schwachstellenzone über im wesentlichen die gesamte Länge des Halterungsabschnitts vorliegt, umfassend die nacheinanderfolgenden Schritte
a) des Brechens der Verglasungsplatte entlang im wesentlichen der gesamten Länge des Halterungsabschnitts; und
b) des nachfolgenden Entfernens der Verglasungsplatte aus dem Rahmen, um so mindestens einige Fragmente von zerbrochenem Glas von dem Halterungsabschnitt an dem Rahmen befestigt zu lassen.

## Revendications

1. Un vitrage feuilleté comprenant au moins deux feuilles de verre collées l'une à l'autre par une feuille intercalaire substantiellement transparente, le vitrage ayant une zone de fixation par laquelle le vitrage est adapté pour être collé à un cadre au moyen au moyen d'un élément de fixation collé à la surface d'une des feuilles de verre, **caractérisé en ce qu'**au moins une partie de la zone de fixation comprend une zone de faiblesse positionnée entre les deux feuilles de verre adaptée pour faciliter la séparation d'au moins une portion du vitrage de son élément de fixation.

2. Un vitrage feuilleté conformément à la revendication 1, dans lequel la zone de fixation suit la périphérie complète du vitrage et dans lequel la zone de faiblesse est présente autour de toute la longueur de la zone de fixation.

3. Un vitrage feuilleté conformément à la revendication 1 ou à la revendication 2, dans lequel la zone de faiblesse comprend une discontinuité dans la feuille intercalaire entre les deux feuilles de verre à la zone de fixation.

4. Un vitrage feuilleté conformément à l'une quelconque des revendications précédentes, dans lequel la zone de faiblesse s'étend sur substantiellement l'entière largeur à laquelle l'élément de fixation est adapté pour être fixé à la zone de fixation.

5. Un vitrage feuilleté conformément à l'une quelconque des revendications précédentes, dans lequel la zone de faiblesse est matérialisée par un élément d'affaiblissement positionné entre les deux feuilles de verre.

6. Un vitrage feuilleté conformément à la revendication 5, dans lequel l'élément d'affaiblissement fournit une zone de moindre adhérence entre les deux feuilles de verre.

7. Un vitrage feuilleté conformément à la revendication 5 ou à la revendication 6, dans lequel l'élément d'affaiblissement qui fournit une zone de moindre adhérence entre la feuille de verre à laquelle l'élément de fixation est adapté pour être fixé et la feuille intercalaire.

8. Un vitrage feuilleté conformément à l'une quelconque des revendications de 5 à 7, dans lequel l'élément d'affaiblissement est un ruban de matière plastique.

9. Un vitrage feuilleté conformément à l'une quelconque des revendications de 5 à 8, dans lequel l'élément d'affaiblissement comprend un matériau appliqué sur une surface de l'une des feuilles de verre et/ou sur une portion de la surface de feuille intercalaire avant le feuilletage des deux feuilles de verre avec la feuille intercalaire afin de former le vitrage feuilleté.

10. Un vitrage feuilleté conformément à la revendication 9, dans lequel le matériau de l'élément d'affaiblissement est sélectionné parmi un groupe consistant en une peinture, une laque, un émail, un antiadhésif et une combinaison de deux ou plusieurs de ces matériaux.

11. Un vitrage feuilleté conformément à l'une quelconque des revendications précédentes, dans lequel au moins un élément chauffant est situé sur ou à proximité de la zone de fixation, l'élément chauffant étant adapté pour provoquer une rupture d'au moins une partie de l'une des feuilles de verre à la zone de fixation lorsqu'il est chauffé de manière à faciliter la séparation du vitrage d'un cadre dans lequel il est fixé.

12. Un vitrage feuilleté assemblé dans un cadre fourni en tant que partie d'un véhicule automobile dans lequel le vitrage feuilleté comprend au moins deux feuilles de verre collées l'une à l'autre au moyen d'une feuille intercalaire substantiellement transparente, le vitrage étant fixé au cadre par une zone de fixation du vitrage à l'aide d'un élément de fixation fixé à une surface d'une des feuilles de verre, **caractérisé en ce qu'**au moins une partie de la zone de fixation comprend une zone de moindre résistance positionnée entre les deux feuilles de verre adaptée pour faciliter la séparation d'au moins une portion du vitrage de l'élément de fixation.

13. Un véhicule comprenant un vitrage feuilleté conformément à l'une quelconque des revendications précédentes assemblé dans un cadre du véhicule, **caractérisé en ce que** l'élément de fixation fixé à la surface d'une des feuilles de verre à la zone de fixation du vitrage comprend un adhésif fixé directement à la carrosserie du véhicule.

14. Utilisation du vitrage conformément à l'une quelconque des revendications de 1 à 11 afin de faciliter le retrait du vitrage du cadre dans lequel il est fixé.

15. Une méthode de retrait d'un vitrage conformément à l'une quelconque des revendications de 1 à 11 d'un cadre dans lequel il est fixé comprenant les étapes séquentielles consistant à
a) briser le vitrage sur au moins une section de la zone de fixation ; et
b) utiliser la section ainsi brisée de la zone de fixation pour fournir un accès facilitant le retrait du vitrage du cadre.

16. Une méthode de retrait d'un vitrage conformément à l'une quelconque des revendications de 1 à 11 d'un cadre dans lequel il est fixé, dans laquelle la zone de fixation du vitrage suit substantiellement la périphérie complète du vitrage et dans laquelle la zone de moindre résistance est présente substantiellement autour de la longueur entière de la zone de fixation comprenant les étapes séquentielles consistant à
a) briser le vitrage sur substantiellement toute la longueur de la zone de fixation ; et
b) enlever ensuite le vitrage du cadre de manière à laisser au moins certains fragments de verre brisé de la zone de fixation attachés au cadre.
